# FASCICULE DE BREVET EUROPEEN

(11) **EP 3 052 930 B1**
(45) Date de publication et mention de la délivrance du brevet: **05.03.2025**
(21) Numéro de dépôt: 14761978.7
(22) Date de dépôt: 04.09.2014
(51) Int. Cl.: G01N 29/06

(54) **PROCÉDÉ ET DISPOSITIF DE CONTRÔLE NON DESTRUCTIF D'UNE SOUDURE D'UNE PIÈCE DE RÉACTEUR NUCLÉAIRE**
VERFAHREN UND VORRICHTUNG ZUR ZERSTÖRUNGSFREIEN PRÜFUNG EINER SCHWEISSVERBINDUNG EINES KERNREAKTORTEILS
METHOD AND DEVICE FOR THE NONDESTRUCTIVE TESTING OF A WELD OF A NUCLEAR REACTOR PART

(30) Priorité: 30.09.2013 FR 1359452
(43) Date de publication de la demande: 10.08.2016
(73) Titulaire: FRAMATOME, 92400 Courbevoie (FR)
(72) Inventeur: JAMBON, Michel, 71380 Epervans (FR); CRAULAND, Jean Marc, 71210 Montchanin (FR)
(74) Mandataire: Lavoix
(86) Numéro de dépôt international: PCT/EP2014/068882
(87) Numéro de publication internationale: WO 2015/043912

(56) Documents cités:
- EP-A1- 2 031 385
- EP-A1- 2 605 009
- DE-A1- 102008 005 971
- FR-A1- 2 840 991
- FR-A5- 2 298 921
- JP-A- 2000 292 414
- JP-A- 2004 219 287
- US-A- 3 100 987
- US-A- 5 677 490
- US-A1- 2007 000 328
- CHARLES BRILLON ET AL: "TOFD Inspection with Phased Arrays", 17<TH> WORLD CONFERENCE ON NONDESTRUCTIVE TESTING, SHANGHAI, CHINA -, 28 October 2008 (2008-10-28), pages 1 - 7, XP055035914
- NISHIO M: "Examination of structures by anew non-destructive examination technique", WELDING INTERNATIONAL, TAYLOR & FRANCIS, ABINGDON, GB, vol. 22, no. 8, 1 August 2008 (2008-08-01), pages 504 - 510, XP001551235, ISSN: 0950-7116, DOI: 10.1080/095071108012351946
- LILLEY J ET AL: "IN-LINE INSPECTION USING TIME-OF-FLIGHT DIFFRACTION", WELDING AND METAL FABRICATION, IPC LTD. HAYWARDS HEATH, GB, vol. 59, no. 8, 1 October 2001 (2001-10-01), XP009006661, ISSN: 0043-2245

## Description

### DOMAINE TECHNIQUE

La présente invention concerne un procédé et un dispositif de contrôle non destructif par ultrasons d'une soudure réalisée dans une pièce de réacteur nucléaire, par exemple dans un générateur de vapeur, dans une cuve ou un pressuriseur de réacteur nucléaire. La présente invention peut être appliquée dans le contrôle non destructif des soudures de fortes épaisseurs, c'est-à-dire des soudures d'une épaisseur supérieure ou égale à 80 mm.

### ETAT DE LA TECHNIQUE ANTERIEUR

Les réacteurs nucléaires comportent de nombreuses pièces réalisées par l'assemblage de plusieurs tronçons soudés entre eux. Ainsi, la cuve principale d'un réacteur nucléaire comporte une paroi constituée par des forges en acier ferritique assemblés par soudage, joints circulaires bout à bout ferritique de fortes épaisseurs. De même, les générateurs de vapeur ou encore les pressuriseurs pour réacteurs nucléaires sont réalisées à partir de tôles ou forgés assemblés par des soudures circulaires de forte épaisseur. Bien que la fabrication de telles pièces fasse l'objet de toutes les précautions, les soudures peuvent comporter des défauts qu'il est nécessaire de détecter.

Pour ce faire, l'art antérieur propose une technique de contrôle non destructif des soudures qui combine la radiographie et une méthode de contrôle manuel par ultrasons de la soudure. Toutefois, une telle technique est longue, elle nécessite de nombreux points de mesure, de nombreux réglages manuels, et en outre, elle nécessite d'avoir accès à l'intérieur et à l'extérieur des pièces à contrôler, ce qui n'est pas toujours aisé.

US 2007/00328 A1 décrit l'inspection par ultrasons d'une soudure dans une pièce pour réacteur nucléaire, en utilisant un capteur TOFD multiélément en technique « phased-array » pour sonder plusieurs zones de la soudure ; ledit capteur comporte un émetteur multiélément et un récepteur multiélément, alignés suivant un axe perpendiculaire à l'axe suivant lequel s'étend la soudure.

### EXPOSE DE L'INVENTION

**L'invention** vise à remédier aux inconvénients de l'état de la technique en proposant un procédé et un dispositif de contrôle non destructif des soudures de pièces pour réacteur nucléaire qui soit plus rapide que ceux de l'art antérieur, plus simple et qui ne nécessite pas d'avoir accès à l'intérieur des pièces.

Un autre objet de l'invention est de proposer un procédé et un dispositif de contrôle volumique des soudures qui soit plus fiable que ceux de l'art antérieur et qui ne nécessite qu'un nombre limité d'acquisitions.

Pour ce faire, l'invention propose de réaliser le contrôle non destructif des soudures de pièces pour réacteur nucléaire par une combinaison de la technique TOFD (Time of flight diffraction), également appelée « mesure du temps de vol» et de la technique phased-array, également appelée « multiélément », de façon à réaliser un contrôle automatisé de la soudure qui peut être effectué lors d'une seule acquisition des données.

Plus précisément, l'invention propose un procédé de contrôle selon la revendication 1.

On appelle « capteur TOFD monoélément » un capteur implémentant la technique TOFD conventionnelle. Un tel capteur comporte un émetteur monoélément et un récepteur monoélément.

On appelle « capteur TOFD multiélément » un capteur implémentant la technique TOFD multiélément. Un tel capteur comporte un émetteur TOFD multiélément et un récepteur multiélément.

Ainsi, l'invention propose de combiner la technique TOFD monoélément, qui est la technique TOFD conventionnelle, pour sonder la zone proche de la surface extérieure de la pièce, avec la technique TOFD multiélément pour sonder la zone de la soudure qui est la plus éloignée de la surface extérieure. Ainsi, à l'aide d'un nombre limité de capteurs, on peut sonder une soudure de forte épaisseur de manière précise. **En** effet, le procédé est particulièrement destiné à des soudures d'épaisseur comprises entre 100 et 300 mm, et de préférence comprise entre 100 et 250 mm.

Le procédé selon l'invention peut également, en complément des caractéristiques de la revendication 1, présenter une ou plusieurs des caractéristiques ci-après prises indépendamment ou selon toutes les combinaisons techniquement possibles.

Avantageusement, la première zone présente une épaisseur strictement inférieure à celle de la deuxième zone, ce qui permet de sonder précisément la zone proche de la surface extérieur de la soudure.

La zone proche de la surface extérieure de la pièce, appelée « première zone » est de préférence située à une profondeur comprise entre 0 et 10 mm par rapport à la surface extérieure de la pièce. La première zone est de préférence située juste sous la surface extérieure de la pièce.

La technique TOFD monoélément dans la première zone est de préférence mise en œuvre avec une première fréquence, de préférence égale à 7.5 MHz.

La deuxième zone est de préférence située à une profondeur supérieure à 30 mm, de préférence supérieure à 35 mm. La deuxième zone présente de préférence une épaisseur comprise entre 100 et 300 mm. Ainsi, l'ensemble de la deuxième zone, qui présente une épaisseur importante est contrôlée à l'aide d'un seul capteur, ce qui permet un gain de temps.

La deuxième zone est de préférence située à une profondeur comprise entre 30 et 250 mm, plus préférentiellement entre 35 et 250 mm.

La technique TOFD multiélément dans la deuxième zone est de préférence mise en œuvre avec une deuxième fréquence, de préférence égale à 2 MHz

Avantageusement, la soudure comporte en outre une troisième zone située entre la première zone et la deuxième zone, le procédé utilisant un deuxième capteur TOFD monoélément pour sonder la troisième zone de la soudure.

La troisième zone est de préférence située à une profondeur comprise entre 5 et 40 mm, de préférence entre 6 et 36 mm. La troisième zone présente de préférence une épaisseur comprise entre 10 et 40 mm, de manière plus préférentielle entre 10 et 30 mm.

Chaque capteur TOFD comporte de préférence un émetteur et un récepteur situés de part et d'autre de la soudure.

L'émetteur et le récepteur du premier capteur TOFD monoélément sont de préférence espacés d'une première distance D1.

L'émetteur et le récepteur du capteur TOFD multiélément sont de préférence espacés d'une deuxième distance D3.

L'émetteur et le récepteur du deuxième capteur TOFD monoélément sont de préférence espacés d'une troisième distance D3.

L'émetteur et le récepteur de la première sonde multiélément sont de préférence alignés selon un axe parallèle à l'axe de la soudure.

La première sonde multiélément émet un faisceau suivant un angle de désorientation compris entre -15° et +15° de façon à optimiser la surface réfléchissante de la soudure.

Avantageusement, le procédé utilise en outre une deuxième sonde multiélément qui permet de rechercher des défauts transversaux.

Un autre aspect de l'invention concerne également un dispositif de contrôle selon la revendication 6.

Avantageusement, le dispositif comporte en outre un deuxième capteur TOFD monoélément pour sonder une troisième zone de la soudure.

Le dispositif comporte également une première sonde multiélément.

Le dispositif comporte également de préférence une deuxième sonde multiélément.

### BREVES DESCRIPTION DES FIGURES

D'autres caractéristiques et avantages de l'invention ressortiront à la lecture de la description détaillée qui suit, en référence aux figures annexées, qui illustrent :
- La figure 1, une vue de dessus d'une pièce contrôlée par un procédé selon un mode de réalisation de l'invention ;
- La figure 2, une vue en coupe d'une pièce contrôlée par un procédé selon un mode de réalisation de l'invention ;
- La figure 3, une vue en coupe d'une pièce contrôlée par un procédé selon un mode de réalisation de l'invention ;
- La figure 4, une vue de côté d'une sonde multiélément utilisée par un procédé selon un mode de réalisation de l'invention ;
- La figure 5, une vue en perspective de la sonde de la figure 4 ;
- Les figures 6 et 7, des vues de dessus de la sonde de la figure 4 ;
- La figure 8, une vue de dessus d'une pièce contrôlée par un procédé de contrôle selon un mode de réalisation de l'invention ;
- La figure 9, une vue en coupe d'une pièce contrôlée par un procédé selon un mode de réalisation de l'invention.

Pour plus de clarté, les éléments identiques ou similaires sont repérés par des signes de références identiques sur l'ensemble des figures.

### DESCRIPTION DETAILLEE D'AU MOINS UN MODE DE REALISATION

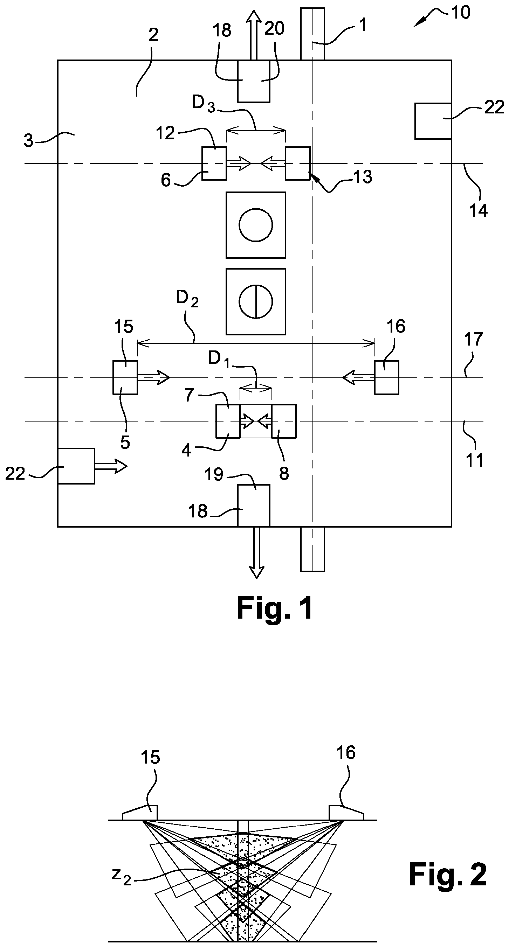

La figure 1 représente une vue de dessus d'une pièce dont on veut contrôler la soudure 1 avec un dispositif et un procédé de contrôle selon un mode de réalisation de l'invention.

Le dispositif de contrôle 2 utilisé est représenté sur la figure 1. Ce dispositif de contrôle 2 comporte une platine 3 sur laquelle sont fixés :
- Un premier capteur TOFD monoélément 4 permettant de sonder une première zone z1 de la soudure;
- Un capteur TOFD multiélément 5 permettant de sonder une deuxième zone z2 de la soudure ;
- un deuxième capteur TOFD monoélément 6 permettant de sonder une troisième zone z3 de la soudure.

Le premier capteur TOFD monoélément 4 comporte un émetteur TOFD monoélément 7 et un récepteur TOFD monoélément 8. L'émetteur 7 et le récepteur 8 sont alignés suivant un axe 1 1 perpendiculaire à l'axe suivant lequel s'étend la soudure 1. La distance D1 entre l'émetteur 7 et le récepteur 8 est choisie de façon à ce que le premier capteur 4 permette de contrôler la zone z1 de la soudure qui est située directement sous la surface extérieure 10 de la pièce à contrôler. La zone z1 est de préférence située à une profondeur p1 comprise entre 1 .5 et 9.5 mm par rapport à la surface extérieure de la pièce.

Le deuxième capteur TOFD monoélément 6 comporte un émetteur TOFD monoélément 12 et un récepteur TOFD monoélément 13. L'émetteur 12 et le récepteur 13 sont alignés suivant un axe 14 perpendiculaire à l'axe suivant lequel s'étend la soudure 1. La distance D3 entre l'émetteur 12 et le récepteur 13 est choisie de façon à ce que le deuxième capteur 6 permette de contrôler la zone z3 de la soudure qui est située sous la zone z1. La zone z3 est de préférence située à une profondeur p3 comprise entre 6 et 36 mm par rapport à la surface extérieure de la pièce.

Le capteur TOFD multiélément 5 comporte un émetteur TOFD multiélément 15 et un récepteur TOFD multiélément 16. L'émetteur 15 et le récepteur 16 sont alignés suivant un axe 17 perpendiculaire à l'axe suivant lequel s'étend la soudure 1. La distance D2 entre l'émetteur 15 et le récepteur 16 est choisie de façon à ce que le capteur TOFD multiélément permette de contrôler la zone z2 de la soudure qui est située sous la zone z3. La zone z2 de la soudure est de préférence située à une profondeur p2 comprise entre 35 et 250 mm par rapport à la surface extérieure de la pièce. L'émetteur TOFD multiélément 15 peut par exemple comporter seize éléments, chaque élément implémentant la technique TOFD. Chaque élément de l'émetteur TOFD multiélément peut être contrôlé indépendamment des autres éléments de façon à émettre un faisceau ultrasonore permettant de sonder une partie de la zone z2 de la soudure. Pour cela, des paramètres de contrôle sont insérés dans un calculateur et des lois de retard à l'impulsion sur les éléments sont définies. Chaque élément a une fonction en angle et profondeur de détection. La technique TOFD est ainsi implémentée sur la base d'une combinaison de capteurs conventionnels pour les zones z1, z2 proches de la surface et multiélément pour la zone z2 plus éloignée de la surface extérieure. L'épaisseur à inspecter est divisée en plusieurs zones. Chaque zone est inspectée par une configuration TOFD dédiée. Les zones z1, z2, z3 ont été définies sur la base de simulations et d'essais pratiques sur des blocs avec entailles. On peut ainsi contrôler des épaisseurs comprises entre 35 et 250 mm avec la technique TOFD, ce qui n'était pas le cas dans l'art antérieur. Les acquisitions ainsi réalisées sont exploitables selon deux méthodes : en balayage parallèle à la soudure et non parallèle à la soudure.

Le premier et le deuxième capteurs TOFD monoélément travaillent de préférence à une fréquence de 7.5 MHz. Le capteur TOFD multiélément travaille de préférence à une fréquence de 2 MHz.

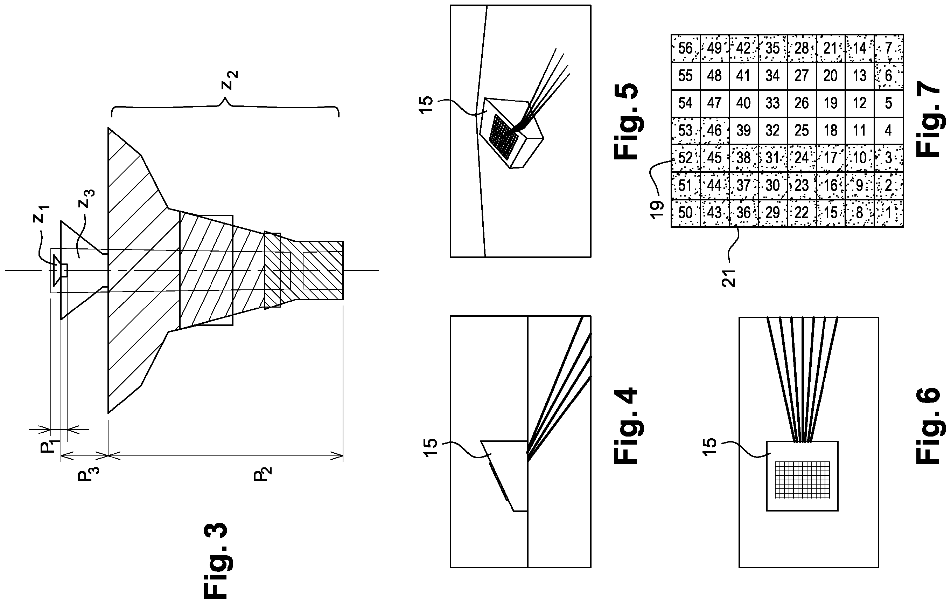

La platine 3 comporte également une première sonde multiélément 18 comportant un émetteur multiélément 19 et un récepteur multiélément 20. Cette première sonde multiélément 18 permet de faire varier l'angle d'ouverture de 45° à 70° et l'angle de skew, de préférence de -15 à + 15°, comme représenté sur les figures 5 et 6.
L'émetteur multiélément 19 et le récepteur multiélément 20 sont disposés d'un même côté de la soudure. L'émetteur multiélément 19 est représenté plus précisément sur les figures 4 à 5. L'émetteur multiélément 19 comporte une matrice de 56 éléments individuels 21 pouvant chacun être pilotés indépendamment. Ces éléments individuels 21 sont connectés à des électroniques de pilotage adaptées permettant d'émettre et de recevoir indépendamment et simultanément sur chacune des voies. Ces électroniques doivent également pouvoir appliquer à l'émission et à la réception des retards électroniques différents pour chaque voie. On remplace le balayage mécanique traditionnel par un balayage électronique beaucoup plus rapide ce qui permet de détecter des défauts longitudinaux et transversaux. La focalisation électronique permet d'utiliser un seul capteur pour travailler à différentes profondeurs. La déflexion électronique autorise la variation des angles d'incidence avec un seul capteur.

La sonde multiélément 18 permet de générer des ondes transversales avec des angles réfractés de 45° à 70° et une désorientation de -15° à +15°, appelée « skew » en anglais.

La platine 3 comporte également une deuxième sonde multiélément 22.

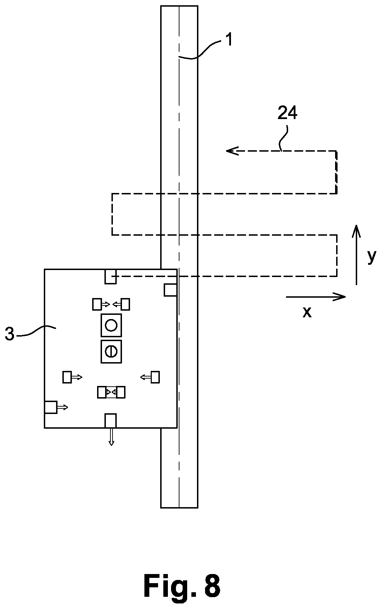

Comme représenté sur la figure 8, la platine 3 ainsi formée se déplace par rapport à la soudure selon le chemin 24, selon un axe x et selon un axe y. L'acquisition des données ultrasonores se réalise par un balayage « raster ». La résolution de l'axe x définit les points d'acquisition spatiaux dans le sens de l'orientation du faisceau des capteurs qui visent la soudure perpendiculairement. La résolution de l'axe y définit les points d'acquisition spatiaux dans le sens de l'orientation du faisceau des capteurs qui visent parallèlement à la soudure.

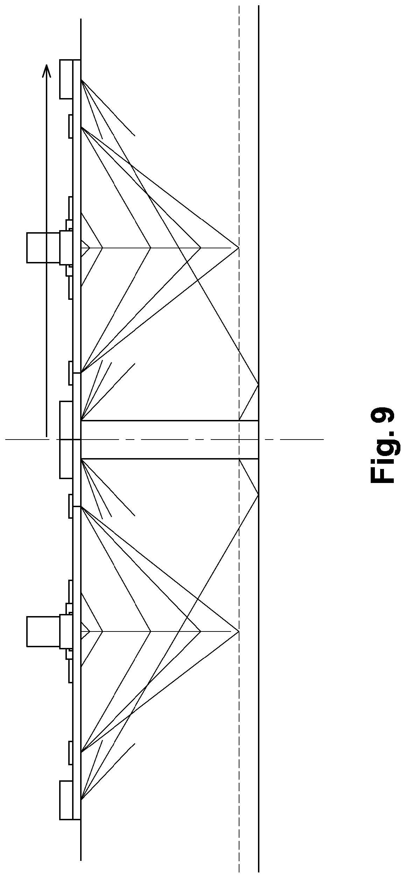

En référence à la figure 9, les capteurs multiéléments sont positionnés afin d'obtenir une amplitude de balayage optimisée pour un angle de 60°.

La platine selon l'invention permet donc de déplacer en même temps tous les capteurs et avec la même amplitude par rapport à la soudure. Elle permet en outre de contrôler des soudures épaisses uniquement par la surface extérieure de la pièce à contrôler.

Naturellement, l'invention est pas limitée aux modes de réalisation décrits en référence aux figures et des variantes peuvent être envisagées sans sortir du cadre de l'invention.

## Revendications

1. Procédé de contrôle non destructif d'une soudure (1) dans une pièce pour réacteur nucléaire, le contrôle combinant la technique par mesure du temps de vol et la technique phased-array, la pièce comportant une surface extérieure (10), la soudure (1) comportant une première zone (z1) proche de la surface extérieure (10) et une deuxième zone (z2) plus éloignée de la surface extérieure (10), le procédé utilisant un dispositif de contrôle (2) comportant une platine (3) sur laquelle sont fixés :
- un premier capteur TOFD monoélément (4) pour sonder la première zone (z1) de la soudure (1),
le premier capteur TOFD monoélément (4) comprenant un émetteur monoélément (7) et un récepteur monoélément (8), l'émetteur monoélément (7) et le récepteur monoélément (8) étant alignés suivant un axe (11) perpendiculaire à l'axe suivant lequel s'étend la soudure (1), et
- un capteur TOFD multiélément (5) pour sonder la deuxième zone (z2) de la soudure (1), le capteur TOFD multiélément (5) comprenant un émetteur multiélément (15) et un récepteur multiélément (16), chaque élément de l'émetteur multiélément étant contrôlable indépendamment des autres éléments de façon à émettre un faisceau ultrasonore permettant de sonder une partie de la deuxième zone (z2), des paramètres de contrôle étant insérés dans un calculateur et des lois de retard à l'impulsion sur les éléments de l'émetteur multiélément étant définies, l'émetteur multiélément (15) et le récepteur multiélément (16) étant alignés suivant un axe (17) perpendiculaire à l'axe suivant lequel s'étend la soudure (1),
la platine (3) comportant une première sonde multiélément (18), la première sonde multiélément (18) émettant des faisceaux d'ondes transversaux, la première sonde multiélément (18) étant apte à générer des ondes transversales avec des angles réfractés de 45° à 70° et une désorientation de -15° à +15°, la première sonde multiélément (18) comportant un émetteur multiélément (19) et un récepteur multiélément (20), l'émetteur multiélément (19) et le récepteur multiélément (20) étant disposés d'un même côté de la soudure.

2. Procédé selon la revendication précédente, dans lequel la première zone (z1) est située à une profondeur (p1) comprise entre 0 et 10mm.

3. Procédé selon l'une des revendications précédentes, dans lequel la deuxième zone (z2) est située à une profondeur (p2) comprise entre 30 et 300 mm.

4. Procédé selon l'une des revendications précédentes, dans lequel la soudure (1) comporte en outre une troisième zone (z3) située entre la première zone (z1) et la deuxième zone (z2), le procédé utilisant un deuxième capteur TOFD monoélément (6) pour sonder la troisième zone (z3) de la soudure (1).

5. Procédé selon la revendication précédente, dans lequel la troisième zone (z3) est située à une profondeur comprise entre 5 et 40 mm.

6. Dispositif de contrôle non destructif combinant la technique par mesure du temps de vol et la technique phased-array, d'une soudure dans une pièce pour réacteur nucléaire, le dispositif comportant une platine (3) sur laquelle sont fixés :
- un premier capteur TOFD monoélément (4) pour sonder une première zone (z1) de la soudure (1), le premier capteur TOFD monoélément (4) comprenant un émetteur monoélément et un récepteur monoélément, l'émetteur monoélément (7) et le récepteur monoélément (8) étant adaptés pour être alignés suivant un axe (11) perpendiculaire à l'axe suivant lequel s'étend la soudure (1) ; et
- un capteur TOFD multiélément (5) pour sonder une deuxième zone (z2) de la soudure (1) plus éloignée d'une surface extérieure (10) de la pièce à contrôler que la première zone (z1), le capteur TOFD multiélément (5) comprenant un émetteur multiélément et un récepteur multiélément, l'émetteur multiélément (15) et le récepteur multiélément (16) étant alignés suivant un axe (17) perpendiculaire à l'axe suivant lequel s'étend la soudure (1), chaque élément de l'émetteur multiélément étant contrôlable indépendamment des autres éléments de façon à émettre un faisceau ultrasonore permettant de sonder une partie de la deuxième zone (z2), et
la platine (3) comportant en outre une première sonde multiélément (18), la première sonde multiélément (18) étant apte à générer des ondes transversales avec des angles réfractés de 45° à 70° et une désorientation de -15° à +15°, la première sonde multiélément (18) comportant un émetteur multiélément (19) et un récepteur multiélément (20), l'émetteur multiélément (19) et le récepteur multiélément (20) étant apte à être disposés d'un même côté de la soudure.

7. Dispositif de contrôle selon la revendication précédente, comportant en outre un deuxième capteur TOFD monoélément (6) apte à sonder une troisième zone (z3) de la soudure (1).

## Patentansprüche

1. Verfahren zur zerstörungsfreien Prüfung einer Schweißnaht (1) in einem Teil für einen Kernreaktor, wobei die Prüfung die Flugzeitmesstechnik und die Phasenarray-Technik kombiniert, das Teil umfassend eine Außenfläche (10), die Schweißnaht (1) umfassend einen ersten Bereich (z1) nahe der Außenfläche (10) und einen zweiten Bereich (z2) weiter entfernt von der Außenfläche (10), wobei das Verfahren eine Prüfvorrichtung (2) verwendet, umfassend eine Platine (3), auf der Folgendes befestigt ist:
- einen ersten TOFD-Einzelelementsensor (4) zum Abtasten des ersten Bereichs (z1) der Schweißnaht (1),
der erste TOFD-Einzelelementsensor (4) umfassend einen Einzelelementsender (7) und einen Einzelelementempfänger (8), wobei der Einzelelementsender (7) und der Einzelelementempfänger (8) entlang einer Achse (11) senkrecht zu der Achse ausgerichtet sind, entlang derer sich die Schweißnaht (1) erstreckt, und
- einen TOFD-Mehrfachelementsensor (5) zum Abtasten des zweiten Bereichs (z2) der Schweißnaht (1), der TOFD-Mehrfachelementsensor (5) umfassend einen Mehrfachelementsender (15) und einen Mehrfachelementempfänger (16), wobei jedes Element des Mehrfachelementsenders unabhängig von den anderen Elementen steuerbar ist, um einen Ultraschallstrahl auszusenden, der es ermöglicht, einen Teil des zweiten Bereichs (z2) abzutasten, wobei Steuerparameter in einen Rechner eingegeben sind und Impulsverzögerungsgesetze für die Elemente des Mehrfachelementsenders definiert sind, wobei der Mehrfachelementsender (15) und der Mehrfachelementempfänger (16) entlang einer Achse (17) senkrecht zu der Achse ausgerichtet sind, entlang derer sich die Schweißnaht (1) erstreckt,
die Platine (3) umfassend eine erste Mehrfachelementsonde (18), wobei die erste Mehrfachelementsonde (18) Transversalwellenstrahlen aussendet, wobei die erste Mehrfachelementsonde (18) geeignet ist, um Transversalwellen mit gebrochenen Winkeln von 45° bis 70° und einer Desorientierung von -15° bis +15° zu erzeugen, die erste Mehrfachelementsonde (18) umfassend einen Mehrfachelementsender (19) und einen Mehrfachelementempfänger (20), wobei der Mehrfachelementsender (19) und der Mehrfachelementempfänger (20) auf derselben Seite der Schweißnaht angeordnet sind.

2. Verfahren nach dem vorherigen Anspruch, wobei sich der erste Bereich (z1) in einer Tiefe (p1) zwischen 0 und 10 mm befindet.

3. Verfahren nach einem der vorherigen Ansprüche, wobei sich der zweite Bereich (z2) in einer Tiefe (p2) zwischen 30 und 300 mm befindet.

4. Verfahren nach einem der vorherigen Ansprüche, wobei die Schweißnaht (1) ferner einen dritten Bereich (z3) umfasst, der sich zwischen dem ersten Bereich (z1) und dem zweiten Bereich (z2) befindet, wobei das Verfahren einen zweiten TOFD-Einzelelementsensor (6) verwendet, um den dritten Bereich (z3) der Schweißnaht (1) abzutasten.

5. Verfahren nach dem vorherigen Anspruch, wobei sich der dritte Bereich (z3) in einer Tiefe zwischen 5 und 40 mm befindet.

6. Vorrichtung zur zerstörungsfreien Prüfung einer Schweißnaht in einem Teil für einen Kernreaktor, die die Technik der Flugzeitmessung und die Phasenarray-Technik kombiniert, die Vorrichtung umfassend eine Platine (3), auf der Folgendes befestigt ist:
- einen ersten TOFD-Einzelelementsensor (4) zum Abtasten eines ersten Bereichs (z1) der Schweißnaht (1), der erste TOFD-Einzelelementsensor (4) umfassend einen Einzelelementsender und einen Einzelelementempfänger, wobei der Einzelelementsender (7) und der Einzelelementempfänger (8) angepasst sind, um entlang einer Achse (11) senkrecht zu der Achse ausgerichtet zu sein, entlang derer sich die Schweißnaht (1) erstreckt; und
- einen TOFD-Mehrfachelementsensor (5) zum Abtasten eines zweiten Bereichs (z2) der Schweißnaht (1), der weiter von einer Außenfläche (10) des zu prüfenden Teils entfernt ist als der erste Bereich (z1), der TOFD-Mehrfachelementsensor (5) umfassend einen Mehrfachelementsender und einen Mehrfachelementempfänger, wobei der Mehrfachelementsender (15) und der Mehrfachelementempfänger (16) entlang einer Achse (17) senkrecht zu der Achse ausgerichtet sind, entlang derer sich die Schweißnaht (1) erstreckt, wobei jedes Element des Mehrfachelementsenders unabhängig von den anderen Elementen steuerbar ist, um einen Ultraschallstrahl auszusenden, der es ermöglicht, einen Teil des zweiten Bereichs (z2) abzutasten,
die Platine (3) ferner umfassend eine erste Mehrfachelementsonde (18), wobei die erste Mehrfachelementsonde (18) geeignet ist, um Transversalwellen mit gebrochenen Winkeln von 45° bis 70° und einer Desorientierung von -15° bis +15° zu erzeugen, die erste Mehrfachelementsonde (18) umfassend einen Mehrfachelementsender (19) und einen Mehrfachelementempfänger (20), wobei der Mehrfachelementsender (19) und der Mehrfachelementempfänger (20) geeignet ist, um auf derselben Seite der Schweißnaht angeordnet zu sein.

7. Prüfvorrichtung nach dem vorherigen Anspruch, umfassend ferner einen zweiten TOFD-Einzelelementsensor (6), der geeignet ist, um einen dritten Bereich (z3) der Schweißnaht (1) abzutasten.

## Claims

1. A method of non-destructive testing of a weld (1) in a part for a nuclear reactor, the testing combining the time-of-flight measurement technique and the phased-array technique, the part comprising an external surface (10), the weld (1) comprising a first zone (z1) close to the outer surface (10) and a second zone (z2) further from the outer surface (10), the method using an inspection device (2) comprising a plate (3) to which are fixed:
- a first single-element TOFD sensor (4) for probing the first zone (z1) of the weld (1),
the first single-element TOFD sensor (4) comprising a single-element transmitter (7) and a single-element receiver (8), the single-element transmitter (7) and the single-element receiver (8) being aligned along an axis (11) perpendicular to the axis along which the weld (1) extends, and
- a multi-element TOFD sensor (5) for probing the second zone (z2) of the weld (1), the multi-element TOFD sensor (5) comprising a multi-element transmitter (15) and a multi-element receiver (16), each element of the multi-element transmitter being controllable independently of the other elements so as to emit an ultrasonic beam enabling part of the second zone (z2) to be probed, control parameters being inserted in a computer and pulse delay laws on the elements of the multi-element transmitter being defined, the multi-element transmitter (15) and the multi-element receiver (16) being aligned along an axis (17) perpendicular to the axis along which the weld (1) extends,
the stage (3) comprising a first multi-element probe (18), the first multi-element probe (18) emitting transverse wave beams, the first multi-element probe (18) being capable of generating transverse waves with refracted angles of 45° to 70° and a disorientation of -15° to +15°, the first multi-element probe (18) comprising a multi-element transmitter (19) and a multi-element receiver (20), the multi-element transmitter (19) and the multi-element receiver (20) being arranged on the same side of the weld.

2. A method according to the preceding claim, in which the first zone (z1) is located at a depth (p1) of between 0 and 10 mm.

3. A method according to one of the preceding claims, in which the second zone (z2) is located at a depth (p2) of between 30 and 300 mm.

4. A method according to any of the preceding claims, wherein the weld (1) further comprises a third zone (z3) located between the first zone (z1) and the second zone (z2), the method using a second single element TOFD sensor (6) to probe the third zone (z3) of the weld (1).

5. A method according to the preceding claim, in which the third zone (z3) is located at a depth of between 5 and 40 mm.

6. A device for non-destructive testing, combining the time-of-flight measurement technique and the phased-array technique, of a weld in a part for a nuclear reactor, the device comprising a plate (3) to which are fixed:
- a first single-element TOFD sensor (4) for probing a first zone (z1) of the weld (1), the first single-element TOFD sensor (4) comprising a single-element transmitter and a single-element receiver, the single-element transmitter (7) and the single-element receiver (8) being adapted to be aligned along an axis (11) perpendicular to which the weld (1) extends; and
- a multi-element TOFD sensor (5) for probing a second zone (z2) of the weld (1) further from an external surface (10) of the part to be inspected than the first zone (z1), the multi-element TOFD sensor (5) comprising a multi-element transmitter and a multi-element receiver, the multi-element transmitter (15) and the multi-element receiver (16) being aligned along an axis (17) perpendicular to the axis along which the weld (1) extends, each element of the multi-element transmitter being controllable independently of the other elements so as to transmit an ultrasound beam making it possible to probe part of the second zone (z2), and
the plate (3) further comprising a first multi-element probe (18), the first multi-element probe (18) being capable of generating transverse waves with refracted angles of 45° to 70° and a disorientation of -15° to +15°, the first multi-element probe (18) comprising a multi-element transmitter (19) and a multi-element receiver (20), the multi-element transmitter (19) and the multi-element receiver (20) being capable of being arranged on the same side of the weld.

7. A test device as claimed above, also comprising a second single-element TOFD sensor (6) capable of probing a third zone (z3) of the weld (1).
